# EUROPÄISCHE PATENTSCHRIFT

(11) **EP 0 327 494 B1**
(45) Veröffentlichungstag und Bekanntmachung des Hinweises auf die Patenterteilung: **05.01.1994**
(21) Anmeldenummer: 89810054.0
(22) Anmeldetag: 24.01.1989
(51) Int. Cl.: F16L 37/28

(54) **Steckbare Sicherheitskupplung, insbesondere für Druckluftleitungen**
Safety plug coupling, especially for pressurized-air conduits
Raccord de sécurité à fiche, notamment pour conduites à air sous pression

(30) Priorität: 03.02.1988 CH 377/88
(43) Veröffentlichungstag der Anmeldung: 09.08.1989
(73) Patentinhaber: Hans Oetiker AG Maschinen- und Apparatefabrik, 8812 Horgen (CH)
(72) Erfinder: Wüthrich, Albrecht, CH-6110 Wolhusen (CH)
(74) Vertreter: Amsler, Martin

(56) Entgegenhaltungen:
- FR-A- 2 028 653
- FR-A- 2 068 039
- GB-A- 638 959
- GB-A- 1 503 647

## Beschreibung

Die vorliegende Erfindung betrifft eine steckbare Sicherheitskupplung für Leitungen von Druckmedien mit einer Kupplungsdose, welche in ihrem Innern ein Sperrorgan aufweist, wobei das Sperrorgan durch eine Schwenkung von einer sperrenden in eine leitende Lage bringbar ist und umgekehrt. Beim Entkuppeln wird das Sperrorgan in eine sperrende Lage gebracht, wobei die Durchgangsbohrung mit ihrer Mündung zusätzlich eine Entlastungsbohrung im Gehäuse überstreicht, durch welche noch unter Druck stehendes Medium im Stecker entweichen kann, wonach der Stecker drucklos aus dem Sperrorgan gezogen werden kann. Als Druckmedien kommen sowohl komprimierbare als auch nicht komprimierbare, fliessfähige Medien in Betracht.
Aus den Dokumenten FR-A-2'028'653 und FR-A-2'068'039 ist eine steckbare Sicherheitskupplung bekannt, die eine Kupplungsdose aufweist, in deren Gehäuse ein Sperrorgan dichtend gelagert ist. Die Kupplungsdose ist ein einstückiges Formstück und das Sperrorgan ist ein zylindrisches Formstück, das eine Bohrung aufweist. Die GB-A-638 959 zeigt ebenfalls eine solche Sicherheitskupplung.

Bei den bisherigen Kupplungen mit einem solchen schwenkbaren Sperrorgan ist die Dichtigkeit insbesondere bei hohen Drucken unzufriedenstellend. Nicht zuletzt ist dies ein Grund dafür, dass die Kupplungen gemäss den Entgegenhaltungen kaum, wenn überhaupt, im Markt anzutreffen sind, obwohl sie vom Prinzip her wie zum Beispiel die Kupplung nach der FR-A-2 028 653 spätestens seit dem 9. Oktober 1970 öffentlich bekannt sind!

Es ist daher die Aufgabe der vorliegenden Erfindung, eine steckbare Sicherheitskupplung mit schwenkbarem Sperrorgang zu schaffen, die im Aufbau und in der Fertigung besonders einfach ist und die auch bei hohen Drucken ohne Leckage arbeitet.

Diese Aufgabe löst eine steckbare Sicherheitskupplung für Druckleitungen gemäss dem Oberbegriff und den kennzeichnenden Merkmalen des Patentanspruches 1.

Erfindungsgemässe Sicherheitskupplungen sind besonders einfach in der Herstellung und sicher in der Handhabung, wobei sie auch bei Betriebsdrucken, die weit über den üblichen Arbeitsdrucken von 5 bis 10 bar liegen, absolute Dichtheit garantieren.

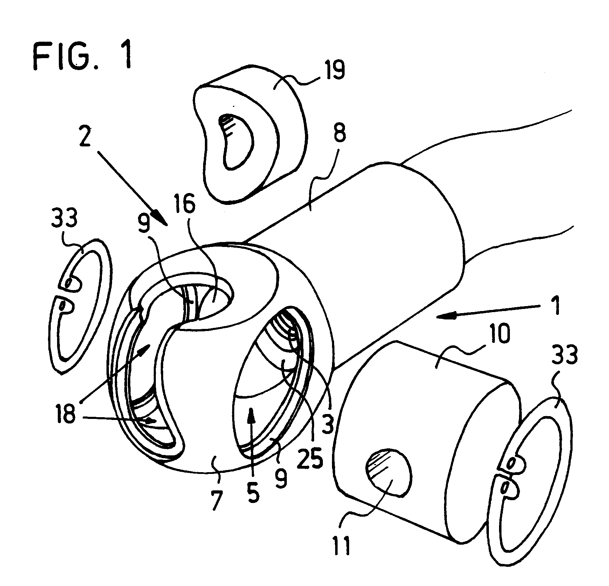

Besondere Ausführungen der erfindungsgemässen Sicherheitskupplung gehen aus den abhängigen Ansprüchen hervor und ihr jeweiliger Aufbau wird in der nachfolgenden Beschreibung erläutert. In den Zeichnungen sind zwei bevorzugte Ausführungsformen dargestellt und nachfolgend beschrieben. Es wird darauf hingewiesen, dass die Ausführungen gemäss den Figuren 1 bis 3 und die entsprechende Beschreibung zu diesen Figuren, nicht in den Prioritätsunterlagen enthalten sind.

Es zeigt:
- Figur 1: eine herkömmliche Kupplung mit einstückigem Gehäuse und zugehörigem schwenkbaren Sperrorgan mit einem konventionellen Dichtungselement, in einer perspektivischen, aufgegliederten Zeichnung;
- Figur 2: das Sperrorgan mit besonderer, erfindungsgemässer Dichtung;
- Figur 3: eine Sicherheitskupplung für besonders hohe Drucke und grosse Leitungsdurchmesser in einer perspektivischen, aufgegliederten Zeichnung.

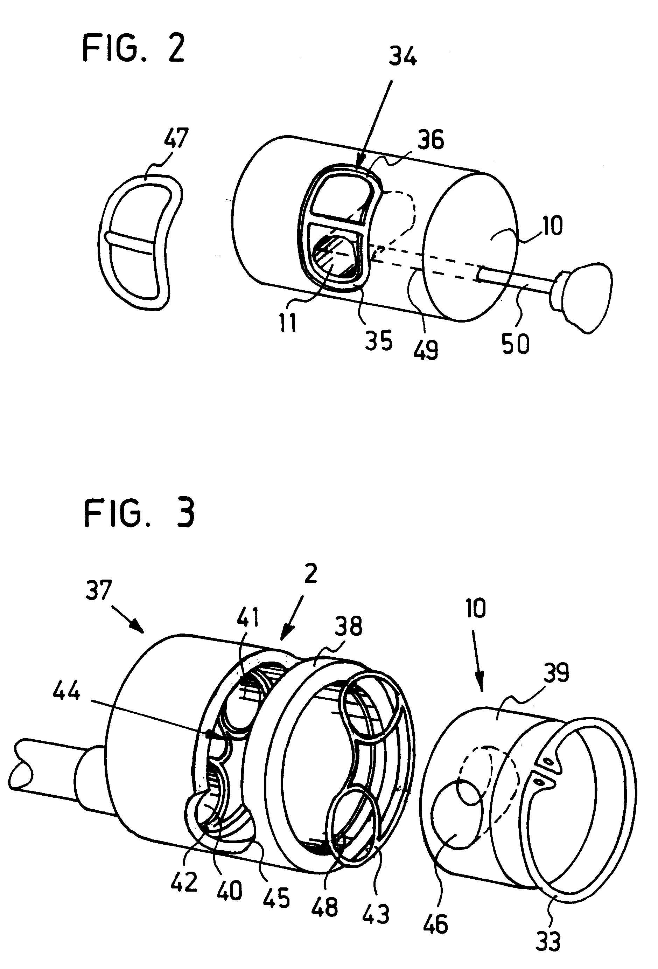

Die Erfindung bezieht sich auf die Figuren 2 und 3, während Figur 1 den grundsätzlichen Aufbau einer Kupplung nach dem Oberbegriff darstellt. Eine solche steckbare Sicherheitskupplung schliesst grundsätzlich eine Kupplungsdose 1 und einen dazugehörigen Stecker ein. Figur 1 zeigt ein besonders elegantes Gehäuse 2 einer Kupplungsdose 1. Es ist mittels Dreh-, Fräs-, Bohr- und Schneidarbeiten einstückig aus einem Rundstahl-Abschnitt hergestellt und weist einen in wesentlichen rundlichen Teil 7 und einen zylindrischen Teil 8 auf. Der zylindrische Teil 8 ist mit einer Gewindebohrung 3 versehen, welche das Aufschrauben der Kupplungsdose 1 auf den Nippel an einem Schlauch- oder Rohr-Endstück erlaubt. Selbstverständlich kann aber dieser zylindrische Teil 8 auch mit einem Aussengewinde versehen sein. Dadurch kann die Kupplungsdose in eine Muffe an einem Schlauch- oder Rohr-Endstück geschraubt werden. Der rundliche Teil 7 weist eine Aufnahmebohrung 5 quer zur Längsachse des zylindrischen Teils 8 auf. Diese Aufnahmebohrung 5 ist zur Aufnahme des nebenstehend gezeichneten Sperrorgans 10 bestimmt. In den endseitigen Rändern der Bohrung 5 ist je eine Kreisnut 9 vorhanden, in welche die Sicherungsringe 33 eingelegt werden können, um das eingesetzte Sperrorgan 10 in der Bohrung 5 zu sichern. Im rundlichen Teil 7 ist ausserdem das Langloch 18 zu erkennen, welches sich um etwa 90 Winkelgrade um die Bohrachse der Bohrung 5 herum erstreckt. Dieses Langloch 18 läuft in eine etwas grössere Oeffnung 16 im Gehäuse 2 aus, welche als Aufnahmeöffnung für den Stecker in der Sperrlage des Sperrorganes 10 dient. Der rundliche Teil 7 des Gehäuses 2 ist parallel zur Radialebene der Oeffnung 16 abgeplattet. Auf der gegenüberliegenden Seite ist der rundliche Teil 7 des Gehäuses 2 ebenfalls abgeplattet. Dank dieser Abplattungen kann die Kupplungsdose mit Hilfe eines Gabelschlüssels auf einen Rohrnippel aufgeschraubt werden. Im Inneren des rundlichen Teils 7 des Gehäuses 2 ist ausserdem eine Sackbohrung 25 vorhanden, die mit der Achse des zylindrischen Teils 8 fluchtet. Diese Sackbohrung 25 hat einen grösseren Durchmesser als das Langloch 18 und die Gewindebohrung 3. Sie muss deshalb gefräst oder gedreht werden. Diese Sackbohrung 25 nimmt herkömmlich das Dichtungselement 19 auf. Dieses Dichtungselement 19 ist im wesentlichen hohlzylindrisch und auf seiner einen Seite weist es eine in einer Richtung konkav gekrümmte Aussenseite auf, sodass es satt und dichtend am eingesetzten Formstück 10 anliegt.
Erfindungsgemäss kann nun die Sackbohrung 25 weggelassen und die Abdichtung des Sperrorgans 10 durch ein in Figur 2 gezeigtes, mindestens aus zwei geschlossenen Schlaufen bestehendes Dichtungselement 47 erreicht werden. Das Sperrorgan 10 weist an seiner Zylinderwand eine besonders gestaltete Nut 34 auf, welche aus ihm ausgenommen ist. Jene Nut 34 besteht gewissermassen aus zwei Ringnuten 35,36, die ein gemeinsames Stück haben. Die eine Ringnut 35 verläuft dabei um die Mündung der Durchgangsbohrung 11, während die andere 36 in Umfangsrichtung an die Ringnut 35 anschliesst und wie gesagt mit ihr ein gemeinsames Stück hat. In diese Ringnut 34 wird das eigens gefertigte Dichtungselement 47 eingelegt, welches exakt in jene Ringnut 34 einpasst. Mittels einer derartigen Dichtung wird in der Leitungslage die Verbindung zwischen der Bohrung 3 in der Kupplungsdose und der Durchgangsbohrung 11 im Sperrorgan 10 abgedichtet. Andrerseits wird in jeder von der Leitungslage abweichenden Lage des Sperrorgan 10 die Bohrung 4 dichtend verschlossen.

Figur 3 schliesslich zeigt in aufgegliederter Darstellung eine weitere Ausführungsvariante der erfindungsgemässen Sicherheitskupplung, die besonders für hohe Drucke und grosse Leitungsdurchmesser geeignet ist. Die Kupplungsdose besteht hier aus einem im wesentlichen zylinderförmigen Gehäuse 37, welches aber etwa zur Hälfte zu einem Kohlzylinder 38 ausgenommen ist, und einem weiteren zylindrischen Formstück 39 als Sperrorgan, welches in das Innere des Hohlzylinders 38 einpasst. Im Gehäuse 37 ist eine Bohrung 40 als Zufuhrleitung und eine weitere Bohrung 41 als Entlastungsbohrung vorhanden. Diese Bohrungen 40,41 erstrecken sich beide in einer zur Zylinderachse parallelen Richtung. Die Zentren der Bohrungen 40,41 sind ausserdem beide gleichweit von der Achse des zylinderförmigen Gehäuses 37 entfernt, sodass die Bohrungen 40,41 bezüglich dieser Zylinderachse auf einem konzentrischen Kreis angeordnet sind. Die Mündung der Bohrung 40, welche ja als Zufuhrleitung dient, ist von einer Ringnut 42 umschlossen, die mit einer weiteren Ringnut, welche um die Mündung der Entlastungsbohrung 41 verläuft, kommuniziert. Dieses wird durch eine diese beiden Ringnuten gewissermassen umschliessende Ringnut erreicht, welche aber wie gesagt mit den beiden Ringnuten kommuniziert, obwohl dies nicht zwingend notwendig wäre. Das Dichtungselement 43 schliesst in diesem Fall drei geschlossene Schleifen ein und wird in die entsprechende Nut im Gehäuse 37 eingelegt. Die Bohrung 40 im Gehäuse 37 ist mit einem Gewinde versehen, welches das Aufschrauben der Kupplungsdose auf den Nippel an einer Zufuhrleitung erlaubt. Der hohlzylindrische Teil 38 des Zylinders 37 weist in seinem Zylindermantel ein Langloch 44 auf, das sich längs der Umfangsrichtung des Hohlzylinders 38 erstreckt. Dieses Langloch 44 läuft auf seiner einen Endseite in ein Loch 45 mit etwas grösserem Durchmesser aus. Das Langloch 44 erstreckt sich insgesamt bezüglich der Zylinderachse über einen Schwenkwinkel, welcher dem Winkel zwischen den Zentren der beiden Bohrungen 40,41 entspricht.
Das zylindrische Formstück 39 weist ein gekrümmtes Durchgangsloch 46 auf, welches zum Beispiel aus einer Bohrung in der radialen Ebene sowie einer Bohrung in Axialrichtung besteht, welche miteinander kommunizieren. Das zylindrische Formstück 39 ist im eingesetzten Zustand mittels des Sicherungsringes 33 in seiner Lage im Inneren des Hohlzylinders 38 gesichert, bleibt jedoch darin schwenkbar. Der Sicherungsring 33 wird hierzu in die Nut 48 in der Innenseite des Hohlzylinders 38 eingesetzt. Die Sicherheitskupplung nach Figur 3 kann besonders einfach hergestellt werden und kann ohne weiteres auch gross dimensioniert werden. Deshalb eignet sie sich insbesondere für hohe Drucke und grosse Leitungsdurchmesser. Es versteht sich, dass bei hohen Drucken und grossen Leitungsdurchmessern die zur Schwenkung des Sperrorganes 39 erforderliche Kraft entsprechend ansteigt. Diesem Umstand kann Abhilfe verschafft werden, indem zwischen das Sperrorgan 39 und den Sicherungsring 33 zusätzlich ein Axialdrucklager eingebaut wird, so dass die Reibungskräfte des Sperrorgans 39 am Sicherungsring 33 weitgehend eliminiert werden. Zum Sperren und Entsperren kann ausserdem das Sperrorgan 39 an seiner frei bleibenden Aussenseite mit einem Schwenkhebel versehen sein. Diese Mittel zum Schwenken können aber auch durch eine in der axialen Richtung verlaufenden Schwenkachse gegeben sein, die mit einem Drehgriff versehen ist.
Ein weiteres Problem, das bei hohen Drucken und grossen Leitungsdurchmessern auftreten mag, ist die stark ansteigende Kraft, um den Stecker während dessen Schwenkung im Sperrorgan hineingedrückt zu halten. Dieses Hineindrücken ist ja nötig, um den Stecker aus seiner Einrastung zu lösen, was dann erst die Schwenkung erlaubt. Bei kleineren Ausführungen der Kupplungsdose und Drucken in der Grössenordnung von einigen bar kann der Stecker mit Leichtigkeit gegen den anstehenden Druck und allfällig gegen die Federkraft einer Druckfeder in das Sperrorgan hineingeschoben und somit aus seiner Einrastung geschoben werden. In dieser Position lässt er sich auch leicht von Hand halten. Wenn nun aber wie gesagt sehr hohe Drucke anstehen und/oder grössere Leitungsdurchmesser beziehungsweise Stecker vorhanden sind, wird dieses zum Problem für die Betätigung der Sicherheitskupplung. Hier kann Abhilfe geschafft werden, indem das Sperrorgang 10 gemäss Figur 2 mit einer Bohrung 49 versehen ist, welche die Bohrung 11, die den Stecker aufnimmt, senkrecht zu deren Achse teilweise schneidet. In diese Bohrung 49 kann ein Sicherungsbolzen 50 eingeschoben werden, welcher in ganz hineingeschobenem Zustand des Steckers in eine besondere Kreisnut im Stecker eingreift und jenen in dieser Lage sichert. Damit kann seine Schwenkung erfolgen, ohne dass er ständig von Hand in das Sperrorgan 10 gedrückt zu werden braucht.
Neben den Bedienungsvorteilen, die bereits beschrieben wurden, muss nochmals mit Nachdruck auf die einfache Bauweise der steckbaren Sicherheitskupplung gemäss der Erfindung hingewiesen werden.

## Patentansprüche

1. Steckbare Sicherheitskupplung für Druckleitungen, mit einem Stecker und einer Kupplungsdose (1), deren Gehäuse (2;37) aus einem einstückigen, auf den Nippel oder die Muffe eines Schlauch- oder Rohr-Endstückes aufschraubbaren Formstück besteht und in dem ein Sperrorgan (10) mit einer Bohrung (11;46) dichtend gelagert ist, wobei das Sperrorgan (10) durch Schwenken von einer sperrenden Lage in eine leitende Lage oder umgekehrt bringbar ist, und wobei die innere Mündung der Bohrung (11;46) im Sperrorgan (10) gegenüber dem Gehäuse (2;37) mittels eines Dichtungselementes (19;43;47) abgedichtet ist, dadurch gekennzeichnet, dass das Sperrorgan (10) zylindrisch oder konisch ist, und dass die Bohrung (11;46) gerade oder gekrümmt ist, wobei das Dichtungselement (19;43;47) mindestens zwei geschlossene Schlaufen einschliesst und entweder in eine im Sperrorgan (10) oder in eine im Gehäuse (2;37) ausgenommene Ringnut (34,35,36;42) eingelegt ist, wobei das Sperrorgan (10) mittels mindestens eines Spannringes (33) im Gehäuse (2;37) gesichert ist.

2. Steckbare Sicherheitskupplung nach Anspruch 1, dadurch gekennzeichnet, dass das Dichtungselement (43;47) drei geschlossene Schlaufen bildet.

3. Steckbare Sicherheitskupplung nach einem der vorhergehenden Ansprüche, dadurch gekennzeichnet, dass um die innere Mündung der Bohrung (11) durch das Sperrorgan (10) aus dessen Zylinder- oder Konuswand eine Ringnut (35) ausgenommmen ist, die in eine weitere, in Umfangsrichtung gelegene Ringnut (36) mündet, welche mit der erstgenannten (35) ein gemeinsames Stück hat, wobei in die durch diese beiden Ringnuten (35,36) insgesamt gebildete Nut (34) ein entsprechend geformtes, gemeinsames Dichtungselement (47) einpasst.

4. Steckbare Sicherheitskupplung nach einem der Ansprüche 1 bis 2, dadurch gekennzeichnet, dass das Gehäuse (2) zylindrisch ist, etwa zu seiner Hälfte zu einem hohlzylindrischen Teil (38) ausgenommen ist, dessen Zylindermantel ein Langloch (44) aufweist, das sich längs der Umfangsrichtung des Zylindermantels erstreckt, und dass im restlichen Teil des Zylinders eine Entlastungsbohrung (41) und eine Druckzuleitungsbohrung (40) vorhanden sind, welche je stirnseitig in das Innere des hohlzylinderischen Teils münden, um diese Mündungen je eine Ringnut verläuft, wobei diese Ringnuten je einen Teil einer gemeinsamen, sie einschliessenden Ringnut (42) bilden, die zur Aufnahme einer entsprechend geformten, einstückigen Dichtung (43) bestimmt ist.

5. Steckbare Sicherheitskupplung nach Anspruch 4, dadurch gekennzeichnet, dass das Sperrorgan (10) ein zylindrisches Formstück (39) ist, das eine gekrümmte Bohrung (46) aufweist, deren eine Endung radial aus dem Formstück (39) mündet, während die andere in axialer Richtung aus dessen Stirnseite mündet.

6. Steckbare Sicherheitskupplung nach einem der vorhergehenden Ansprüche, dadurch gekennzeichnet, dass das Sperrorgan (10) an mindestens einer seiner ebenen Seiten einen Hebel oder eine in seiner axialen Richtung verlaufende Schwenkachse mit Drehgriff zur Schwenkung des Sperrorgans (10) von aussen aufweist.

7. Steckbare Sicherheitskupplung nach einem der Ansprüche 4 bis 6, dadurch gekennzeichnet, dass zwischen dem Sperrorgan (39) und dem Sicherungsring (33) zusätzlich ein Axialdrucklager eingebaut ist.

8. Steckbare Sicherheitskupplung nach einem der vorhergehenden Ansprüche, dadurch gekennzeichnet, dass das Sperrorgan (10) eine Bohrung (49) aufweist, welche die Bohrung (11) für den Stecker teilweise schneidet, sodass ein Sicherungsbolzen (50) in diese Bohrung (49) einschiebbar ist, welcher in eine besondere Kreisnut am Stecker eingreift und den Stecker während seiner Schwenkung sichert.

## Claims

1. A pluggable safety coupling for pressure pipes, with a plug and a coupler socket (1), whose housing (2;37) consists of a one-piece shaped part which can be screwed onto the nipple or the socket of the end part of a tube or pipe, and in which a blocking element (10) with a bore (11;46) is sealingly housed, the blocking element (10) being able to be swivelled from a blocking position to a piping position or vice versa, and the inner opening of the bore (11;46) in the blocking element (10) being sealed off with respect to the housing (2; 37) by means of a sealing element (19;43;47), characterized in that the blocking element (10) is cylindrical or conical, and in that the bore (11;46) is straight or curved, the sealing element (19;43;47) encompassing at least two closed loops and being inserted into a ring groove (34,35,36;42) contrived in either the blocking element (10) or in the housing (2;37), the blocking element (10) being secured in the housing (2; 37) by means of at least one tension ring (33).

2. The pluggable safety coupling of claim 1, characterized in that the sealing element (43;47) forms three closed loops.

3. The pluggable safety coupling of one of the preceding claims, characterized in that around the inner opening of the bore (11) through the blocking element (10) a ring groove (35) is contrived in its cylindrical or conical wall, which opens into another ring groove (36) positioned in the direction of the periphery, which forms a common element with the first mentioned (35), a correspondingly shaped, common sealing element (47) fitting into the overall groove (34) formed by these two ring grooves (35,36).

4. The pluggable safety coupling of one of claims 1 to 2, characterized in that the housing (2) is cylindrical, approx. one half of which is recessed to form a hollow cylindrical part (38) in whose cylinder shell there is an elongated hole (44) which extends along the direction of the circumference of the cylinder shell, and in that in the remaining part of the cylinder there are a pressure discharge bore (41) and a pressure supply bore (40) which each open out at the front into the inside of the hollow cylindrical part, and around each of these openings runs a ring groove, these ring grooves each forming one part of a common ring groove (42) which encircles them, which is intended to engage with an appropriately shaped, one-piece sealing (43).

5. The pluggable safety coupling of claim 4, characterized in that the blocking element (10) is a cylindrical shaped part (39) which has a curved bore (46), of which one end opens out radially from the shaped part (39), whilst the other opens out of its end wall in the axial direction.

6. The pluggable safety coupling of one of the preceding claims, characterized in that the blocking element (10) has on at least one of its level sides a lever or a pivot axis with turning handle running in its axial direction so that the blocking element (10) can be swivelled from the outside.

7. The pluggable safety coupling of one of claims 4 to 6, characterized in that between the blocking element (39) and the sealing ring (33), a thrust bearing is additionally incorporated.

8. The pluggable safety coupling of one of the preceding claims, characterized in that the blocking element (10) has a bore (49) which partially intersects the bore (11) for the plug so that a retaining bolt (50) can be inserted into this bore (49), which engages with a particular circular groove on the plug and secures the plug whilst it is swivelled.

## Revendications

1. Raccord de sûreté enfichable pour des conduites sous pression, comportant une fiche et une boîte de raccordement (1), dont le boîtier (2; 37) est constitué par une pièce d'un seul tenant moulée, vissable sur le nipple ou le manchon d'un embout de tuyau souple ou rigide et dans lequel un organe de blocage (10), comportant un orifice (11; 46), est logé étanche, l'organe de blocage (10) pouvant être amené par pivotement d'une position de blocage dans une position conductrice ou inversement, cependant que l'embouchure intérieure de l'orifice (11; 46) dans l'organe de blocage (10) est rendue étanche par rapport au boîtier (2; 37) au moyen d'un élément d'étanchéité (19; 43; 47), caractérisé en ce que l'organe de blocage (10) est cylindrique ou conique et que l'orifice (11; 46) est droit ou courbe, cependant que l'élément d'étanchéité (19; 43; 47) comprend au moins deux boucles fermées et qu'il est inséré dans une rainure annulaire (34, 35, 36; 42) pratiquée soit dans l'organe de blocage (10) soit dans le boîtier (2; 37), l'organe de blocage (10) étant arrêté dans le boîtier (2; 37) au moyen d'au moins une rondelle d'arrêt (33).

2. Raccord de sûreté enfichable suivant la revendication 1, caractérisé en ce que l'élément d'étanchéité (43; 47) forme trois boucles fermées.

3. Raccord de sûreté enfichable suivant une des revendications précédentes, caractérisé en ce qu'autour de l'embouchure intérieure de l'orifice (11) traversant l'organe de blocage (11) il est pratiqué dans sa paroi cylindrique ou conique une rainure annulaire (35), qui débouche dans une autre rainure annulaire (36) disposée sur le pourtour et ayant avec la première (35) une partie commune, cependant que dans la rainure (34) formée au total par ces deux rainures annulaires (35, 36) s'insère un élément d' étanchéité commun (47), de forme correspondante.

4. Raccord de sûreté enfichable suivant une des revendications 1 à 2, caractérisé en ce que le boitier (2) est cylindrique, qu'il est creusé approximativement sur sa moitié en une partie cylindrique creuse (38), dont la chemise cylindrique présente un trou oblong (44), s'étendant le long du pourtour de la chemise cylindrique et que dans la partie restante du cylindre sont pratiqués un orifice de décharge (41) et un orifice d'alimentation sous pression (40), qui débouchent chacun frontalement dans l'intérieur de la partie cylindrique creuse, une rainure annulaire étant disposée autour de chacune de ces embouchures, cependant que ces rainures annulaires forment chacune une partie d'une rainure annulaire commune (42) qui les comprend et est destinée à recevoir un joint (43) d'une seule pièce et de forme correspondante.

5. Raccord de sûreté enfichable suivant la revendication 4, caractérisé en ce que l'organe de blocage (10) est une pièce moulée cylindrique (39), présentant un orifice courbe (46), dont une extrémité débouche radialement de la pièce moulée (39), tandis que l' autre débouche axialement de sa face frontale.

6. Raccord de sureté enfichable suivant une des revendications précédentes, caractérisé en ce que l'organe de blocage (10) présente sur au moins une de ses faces planes un levier ou un pivot disposé dans son axe et comportant une poignée tournante, pour faire pivoter l'organe de blocage (10) de l'extérieur.

7. Raccord de sûreté enfichable suivant une des revendications 4 à 6, caractérisé en ce qu'entre l'organe de blocage (39) et la rondelle d'arrêt (33), il est disposé en plus un palier axial de butée.

8. Raccord de sûreté enfichable suivant une des revendications précédentes, caractérisé en ce que l'organe d'arrêt (10) présente un orifice (49) qui coupe en partie l'orifice (11) destiné à la fiche, de sorte qu'une tige d'arrêt (50) peut être insérée dans cet orifice (49), qu'elle pénètre dans une rainure circulaire particulière de la fiche et arrête la fiche pendant son pivotement.
